# EUROPEAN PATENT APPLICATION

(11) **EP 2 284 731 A2**
(43) Date of publication of application: **16.02.2011**
(21) Application number: 10172539.8
(22) Date of filing: 11.08.2010
(51) Int. Cl.: G06F 17/30

(54) **Personalized search engine based on special keyword placement**

(30) Priority: 11.08.2009 US 539244
(71) Applicant: Nebulastar, Ltd., Eltham London SE9 1YG (GB)
(72) Inventor: Knight, Steve, London, N2 9AF (GB)
(74) Representative: Lawrence, John

(57) **Abstract**

Computer-implemented methods and systems for searching network information through the use of user identification information, user preference information, and search topic information embedded in predetermined web sites. At least one of the user identification information and the user preference information may be collected from the user (202b) through the use of a questionnaire, encrypted, and stored (202c) under a user profile (205). Search information may be received (250a) from the user, encrypted, and utilized in performance of the network search by matching (250b) at least a portion of the encrypted search information with encrypted search topic information located in the predetermined web sites. The search may include matching (250b) at least a portion of the encrypted user identification information and/or the encrypted preference information with the encrypted search topic information located in the predetermined web sites.

## Description

### FIELD OF THE INVENTION

The present application relates to systems and methods for searching and retrieving information, and more particularly to information searching methods and systems using a personalized search engine over a data communication network.

### BACKGROUND OF THE INVENTION

Data of a variety of types may be transmitted and received via data communication networks. Such data communication networks may include the Internet, which is a world-wide network of computer devices. Each computer device on a data communication network may be identified by a unique address. The World Wide Web ("WWW") is a group of these computers accessible to each other via a common communication protocol, or language, including but not limited to the Hypertext Transfer Protocol ("HTTP"). Resources on the computers in each domain are identified with unique addresses called Universal Resource Locator ("URL") addresses. A web site is a location on a network, such as a web, and may include an individual domain, multiple domains, or even a single URL. A web site may include one or more web pages including information for presentation to a user via a display device.

A web page on the Internet and/or WWW may be accessed by specifying an address of that web page, either by typing a URL or numerical address of the page into a web browser software application, or by following a hyperlink to that page or resource, again using the web browser. The web browser then initiates a series of communication messages to retrieve and display the requested web page. When the URL is entered into the web browser, the server-name portion of the URL is typically resolved into an Internet Protocol ("IP") address using a global, distributed Internet database such as the domain name system ("DNS"). The web browser then requests the resource by sending an HTTP request to the Web server at that resolved address. In a typical web page, the HTML text of the page is requested first and parsed by the web browser application, which will then make additional requests for images and any other files that are included within the requested web page. Having received the required files from the Web server, the web browser application then renders the page onto a display device for viewing by the user. Many web pages will themselves contain hyperlinks identifying other related web pages, downloads, image files, video files, audio files, source documents, definitions, and other web resources.

Web sites may include resources of many types, for example, in the form of files containing data. Such files may be of different types and/or formats, and a type and/or format of such files may be indicated by a naming scheme. For example, files having a ".htm" or ".html" ending may include text files, or pages, formatted in a specific manner labeled Hypertext Mark-up Language ("HTML"). HTML includes a collection of tags used to mark blocks of text, label them, and specify a location where they should be rendered on the requested web page by the web browser software application.

A mechanism for searching a network, such as the Internet, including, but not limited to an Internet search engine, is an application operable to help users search for, identify, and retrieve information on the Internet. This is accomplished, for instance, by searching a database of web resources. The searching may be performed using a set of standard interface programs, including, but not limited to Common Gateway Interface ("CGI") software programs. These programs may process data, pass the data to other server side programs if necessary, and return the appropriate response to the client computer. Further, this is accomplished through the use of a user interface that may allow a person to manipulate the database searching processes on the database typically by an HTML form containing fields, into which the user may input data. These data may be in a number of different forms including, for instance, plain text, phrases, or Boolean expressions.

The Internet search engine allows users to query resources on the Internet and to locate content that is relevant to the user's query. A user can visit a search engine web site, using a web browser, and enter a query into a form (or page), including, but not limited to, an HTML page, provided for the task. The query may be in several different forms, but most common are words, phrases, or questions. The query data may be sent to the search engine through a standard interface, including, but not limited to the CGI. The CGI may include a device of passing data between a client (a computer requesting data or processing) and a program or script on a server (a computer providing data or processing).

The combination of a form on a HTML page and a CGI script is an example of a script application. The search engine may inspect its database for the URLs of resources most likely to be relevant to the submitted query. The list of URL results may be returned to the user, with the format of the returned list varying amongst different known search engines. The returned hyperlinks may be sorted by relevance, with the most relevant resources being located at the top of the list. Search engines typically follow a set of processing steps to determine a relevance of one or more resources. The steps differ between search engines. For example, the rules may be based around the frequency and location of keywords on a page, keywords being words and phrases derived from the user query. For instance, a page containing one or more keywords in its title may be determined to be more relevant than a page without those keywords in its title. Similarly, a page that recites one or more keywords in initial paragraphs of its body, or in headings on the page, may be determined to be more likely to be relevant than pages that do not. Furthermore, if a page frequently recites a keyword, then that page may be determined to be more likely to be relevant than a page that infrequently recites keywords. A further example is Google's PageRank™ technology, which examines the entire link structure of the web and determines which pages are most important, and conducts hypertext-matching analysis to determine which pages are relevant to the specific search being conducted.

In several conventional systems, the web server sends the query to one or more index servers. The content stored by the index servers may be similar to an index of a book, in that it may identify pages which contain words that match the query. The query may then be used to retrieve and transmit those identified pages. Pieces of information may be generated to describe each search result and the search results are returned to the user.

However, such index-based search processing may be inefficient, and may result in the identification and retrieval of web pages that, although they may contain information matching the user's query, are not relevant to the user's interest or information needs. Furthermore, with the vast amount of information on the Internet, the amount of web pages that may be returned can be overwhelming.

Accordingly, there exists a need for an improved information search engine, such as a search engine that is personalized to a user and configured according to the user's preferences, to efficiently search for, identify, and retrieve information relevant to the user. A need also exists for a search engine to achieve greater search efficiency by utilizing specific identifiers located on and/or stored within predetermined websites.

### SUMMARY OF THE INVENTION

The following description of various embodiments of computer-implemented methods, computer-readable media, and computer systems is not to be construed in any way as limiting the subject matter of the appended claims.

Embodiments of the invention provide a computer-implemented method for providing personalized search results from an online search engine. The method includes selecting a set of documents responsive to a user query and a user profile, wherein the user profile comprises user interest information. In some embodiments, the set of documents are encoded with keywords which match keywords of user interest information. In other embodiments, the user interest information is derived from a personal questionnaire responded to by the user. In still other embodiments, the user profile includes information derived from prior search queries provided by the user. In some embodiments, the documents are automatically arranged, filtered, re-ranked, or organized based on the user interest information and the selection of documents may be processed in accordance with a browser application.

In another embodiment, a computer implemented personal search system for one or more users, the system including a personalized search engine module for providing personalized search results from an online search engine which utilizes a user profile comprising user interest information. In some embodiments, the system also includes one or more of the following: a security module for protecting the user profile from either computer viruses or computer predators; a notification module for retrieving new web site content based on the user profile; an electronic mail module for shielding the user from unwanted electronic mail and or unwanted advertising; a social networking module for connecting the one or more users to each other of similar user profiles; a professional networking module for connecting the one or more users to each other of similar user professional profiles; or a random interest module for retrieving random web site content based on the user profile. In some embodiments, the system includes one or more components to isolate private information from the public domain. The system may also include a toolbar that provides an interface and internal functionality to type keywords and to send requests.

In yet another embodiment, a computer-implemented system for searching information is described which includes at least one computer device operable by a user capable to receive user identification information of the user; provide a user with a questionnaire containing at least one preference information question; receive user preference information in response to the questionnaire; receive search term information from the user; search for at least one of the identification information, the user preference information, or the search term information in one or more predetermined web sites; and present a listing to the user when at least one of identification information, the user preference information, or the search term information is located, the listing including information associated with at least one of the predetermined websites containing the located information. The system may also include at least one computer device capable of at least one of the following: encrypting at least one of the received user identification information and received user preference information; encrypting at least a portion of the received search term information; receiving search topic information of at least one predetermined web site; encrypting the received search topic information; and transmitting the encrypted search topic information to the predetermined web site. In some embodiments, the search term information is associated with an Internet search, an intranet search, an extranet search, or a database search. In some embodiments, the questionnaire includes at least one question associated with a user preference or the questionnaire includes at least one multiple choice question. In some embodiments, the user preference information includes at least one of a food preference of the user, a clothing preference of the user, an artistic preference of the user, a travel preference of the user, a geographic preference of the user, a lifestyle choice of the user, and employment information of the user. In some embodiments, the search includes comparing at least a portion of the encrypted identification information, the encrypted user preference information, or the encrypted search term information with information contained in the one or more predetermined web sites. In other embodiments, the listing includes at least one web page universal resource locator and/or is presented in an order of relevance. In some embodiments, the order of relevance is based upon one of the following: a number of times a at least a portion of the encrypted identification information, the encrypted user preference information, or the encrypted search term information appears on the respective predetermined web site; a location of at least a portion of the encrypted identification information, the encrypted user preference information, or the encrypted search term information search query term on the respective predetermined web site; an amount paid to subscribe to the search term information; upon a link structure of the respective predetermined web site including the located information. In some embodiments, updating the user profile based upon information selected by the user in a prior search result. In alternate embodiments, the system also includes executing an protection application program that protects a computer device of the user used to perform the search and the protection application program may include an anti-virus application. In some embodiments, the system also includes one or more of the following: informing the user of a change or new information contained on at least one of the predetermined websites; executing an electronic mail application; executing an anti-spam application for filtering spam electronic mail communications from the electronic mail application; matching the user with another user based upon the user preference information of the user and upon user preference information of the other user; or informing the user of a change or new information contained on at least one random website based upon the user preference information of the user.

### BRIEF DESCRIPTION OF THE DRAWINGS

Embodiments of the present application are illustrated by way of example in the accompanying figures, in which like reference numbers indicate similar elements, and in which:
FIG. 1 is an embodiment of a personalized search engine application according to the present application;
FIG. 2 is an embodiment of the personalized search engine application profiles according to the present application;
FIG. 3 is an embodiment of a method of generating a user profile according to the present application; and
FIG. 4 is an embodiment of a method of using the search module of the personalized search engine to produce personalized search results.

### DETAILED DESCRIPTION

The exemplary embodiments of the present application relate to systems and methods for searching information on data communication networks, for example, the Internet. However, the exemplary embodiments are not limited to the Internet, and may be applicable to other data communication networks such as, for instance, an intranet, an extranet, one or more databases, or any other collection of data stored locally or remotely on one or more computer devices.

The information searched using the systems and methods of the present application may be located and/or served via one or more web sites. The one or more web sites may include one or more web pages, each web page including a set of information served by, for example, a HTTP server software application for rendering and display to a user via a display associated with the user's computer and/or communication device. In an exemplary embodiment of the present application, searches are performed using an enhanced, personalized search engine. Throughout the present application, the personalized search engine may also be referred to as a "Personalized Search Dog" or "PSD." The PSD may include one or more software application modules, and the modules may be stored on and/or executed on different computer devices. For example, a base module of the PSD may be stored on and/or executed by a central computer device and/or server, while individual user terminal computer devices may each store and/or execute client PSD applications. Alternatively, the PSD may be stored on and/or executed at a central location, while users may interact with the PSD through the use of communication applications such as a web browser software application, or other communication applications. In the present application, a PSD module or interface operable from a terminal of a user will be referred to as a "PSD client application," although as will be understood by one skilled in the art, the PSD client application may be structured as a module of a larger application, or may include an interface to a PSD application stored on and/or executed at a central location. Each user may be associated with an individual PSD account, which may be created and utilized as described in the present application.

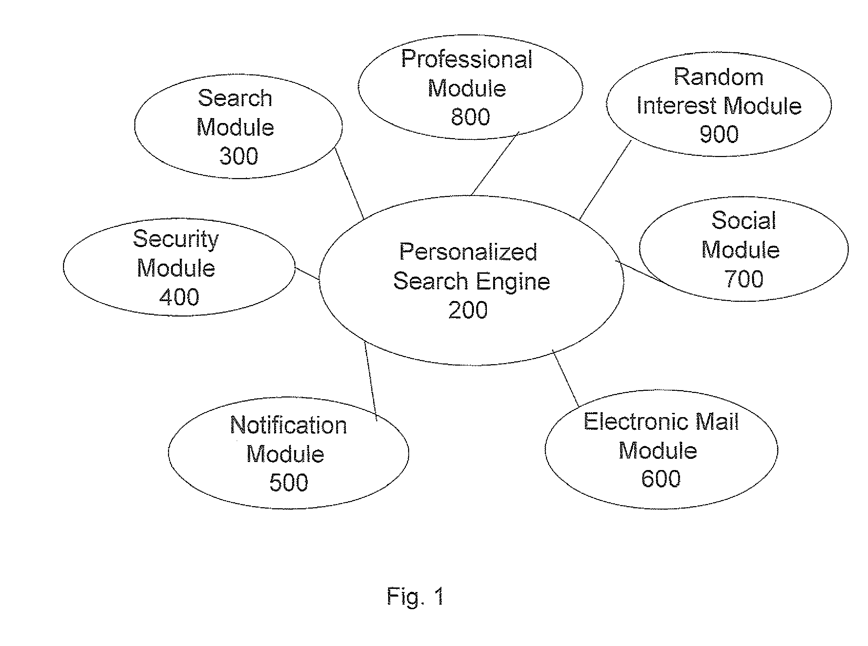

Although the exemplary embodiments are described in the present application with respect to a computer system including a personal computer device, the PSD may be used in association with any electronic communication device capable of transmitting and/or receiving communication data, such as portable computer devices, cell phones, personal digital assistants, or other mobile communication devices. Referring to FIG. 1, in a preferred embodiment, a PSD 200 includes at least one module. Some exemplary modules include, but are not limited to, a personalized search module 300, a security module 400, a notification module 500, an electronic mail module 600, a social module 700, and a profession module 800. A user of the PSD 200 is able to pick and choose the modules they wish to include in the PSD 200 and would also be able to add or delete modules as the need arises.

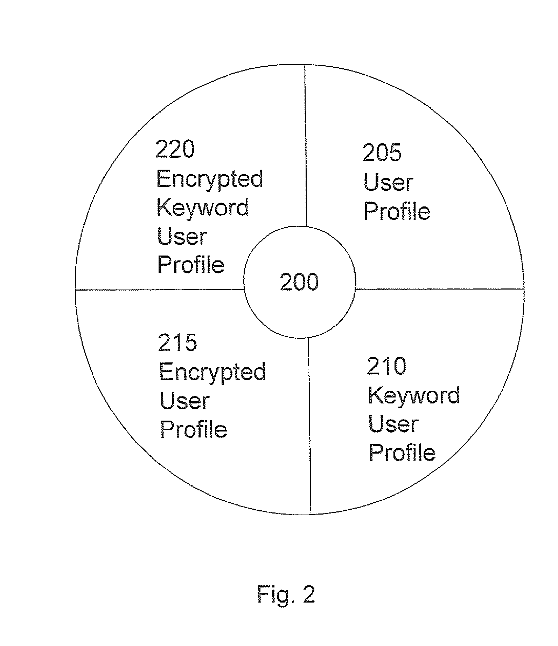

Referring to Fig. 2, the PSD 200 includes a user profile 205 and a keyword user profile 210 which the modules access to personalize their respective functions. In an alternate embodiment, the PSD 200 further includes an encrypted user profile 215 and an encrypted keyword user profile 220 which the modules securely access to personalize their respective functions. The modules provide electronic services to the user and any of the profiles may be used to customize the service to the user preferences.

The PSD 200 preferably "personalizes" the Internet for a user via the user profile 205, the user keyword profile 210, the encrypted user profile 215, or the encrypted keyword user profile 220. For example, when a user performs an internet search through the PSD 200, either the user profile 205 or the keyword user profile 210, is used to search for web sites which not only meet the search criteria but also match some of the characteristics of the either the user profile 205 or the keyword user profile 210. In an alternate embodiment, the encrypted user profile 215 or the encrypted keyword user profile 220 may be used. In some embodiments, the profiles may be interchangeable, i.e., the user profile 205 may be used instead of the keyword user profile 210. Preferably, the PSD 200 will be programmed to determine which profile should be used for which module/application and whether it should be the encrypted version or not. In some embodiments, the PSD 200 will have logic written into the program to determine which of the profiles is best suited based upon the information which would be needed by the module.

The user profile 205 of the PSD 200 may include, for example, one or more entries storing the preference information of the user, along with identification information of the user, and any other pertinent information. Such information can include age or demographic information, personal interests such as hobbies, income level, educational information, and substantially any type of data that indicates a personal preference of the user.

The keyword user profile 210 is preferably a subset of the user profile 205. The keyword user profile 210 may be the user profile 205 condensed to a set of keywords which exemplify the user. Some examples of keywords, but not limited to, may be thrifty, arty, grunge, hippie, alternative, Caucasian, eclectic, single, married, Asian, African-American, and foodie. In an alternate embodiment, the keyword user profile 210 may be identical to the user profile 205.

In a preferred embodiment, the user profile 205 includes, but is not limited to, information as entered into and/or specified on a questionnaire. In other embodiments, data can be collected from users in substantially any form such as from interfaces and stored in various forms to enable ranking, sorting, or filtering of information from searches. In another embodiment, the PSD 200 may operate in the background of a user's machine and collect data as the user interacts with the machine or applications running on the machine. This can include drawing inferences about the user and employing learning components to determine personal traits of the user to facilitate search processing.

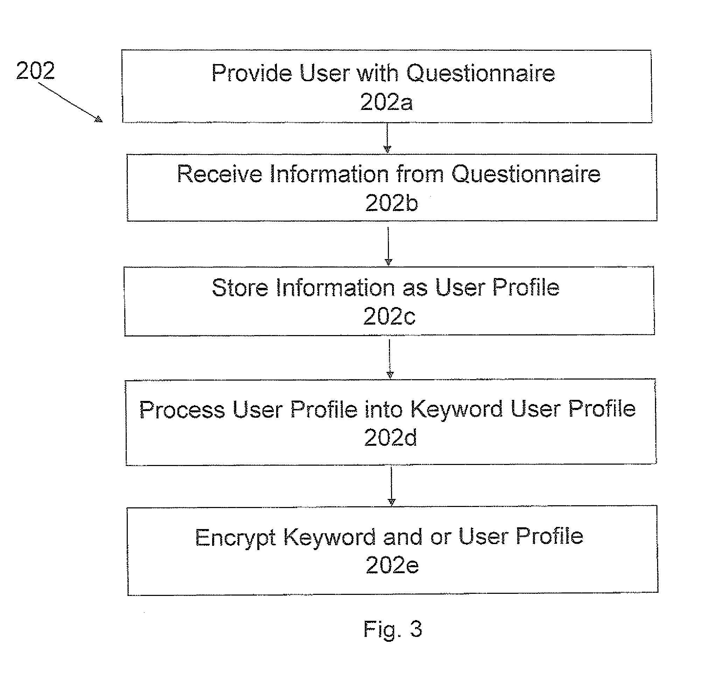

Referring to Fig. 3, a preferred method 202 of configuring the PSD 200 first includes providing a questionnaire to a user 202a. In a preferred embodiment, the questionnaire is preferably composed of multiple choice questions which may include preference questions regarding interests, choices, tastes, proclivities, hobbies, or background. In an alternate embodiment, the questionnaire may further include questions and/or requests for information regarding preferences of the user, such as for example: art preferences of the user, political preferences of the user, food preferences of the user, travel preferences of the user, music preferences of the user, fashion preferences of the user, location preferences of the user, occupation preferences of the user, educational preferences of the user, language preferences of the user, and the like. The questionnaire may also include questions and/or requests for identification information, either through provision via the questionnaire, or before or after completion of the questionnaire by the user, relating to for example: name and/or address of the user, age of the user, sex of the user, employment information of the user, past, present, or anticipated residence information of the user, work history information of the user, education level information of the user, education organization information of the user, marital information of the user, information regarding children of the user, and the like. In an alternate embodiment, the user may also include identification information such as what age you think you are or act like or the user may respond to a series of questions which would generate an age from the responses.

The user preference information received from the questionnaires may overlap the identification information of the user, and the preference information and the identification information may be similar to or may be different. For instance, the identification information may include a user's present profession and/or title, whereas the preference information may include a user's preferred profession and/or title; the present and preferred professions and/or title may or may not be the same.

The questionnaire may be in any suitable form, and the questions and/or requests for information of the questionnaire may be in any suitable format. For example, the questionnaire may be in the form of a web page accessible by the user and containing a set of choices selectable by the user. The questionnaire may alternatively be in the form of a paper list of questions and/or requests for information. Alternatively, the preference and/or other information may be received from the user for example through a discussion with a person either by telephone, in person, via online chat, via instant messaging, or any other suitable format.

The questionnaire may include a list of questions. The questions may include a set of possible responses from which the user may select, or the questions may request the user to supply a response and/or information without suggestion. The questionnaire may include a narrative, and the questions and/or requests for information may include images and/or audio information. In an exemplary embodiment, the questions of the questionnaire may be formulated to elicit single word answers from the user. In a preferred embodiment, these single word answers may be subsequently used as keywords in the keyword user profile 210. Keywords may be determined using any number of methods known to those skilled in the art.

In an alternate embodiment, the questionnaire may present a scale from which the user may choose their level of interest. Some examples of scales include love - like - hate, never - sometimes - always, or a numerical scale from 1 - 10, or the like. In some embodiments, the PSD 200 will use these responses to produce characteristics of the user profile 205 by converting the scale values into keywords. For example, if the user chooses a scale value over 7, a keyword may be assigned to the user profile 205. Keywords which are may be determined using any number of methods known to those skilled in the art.

When the questionnaire is presented in interactive and/or electronic format, the questionnaire may be adaptive, and a length and/or content of the questionnaire may be modified based upon answers provided by the user. In an exemplary embodiment, for example, when a user inputs or otherwise chooses a response such as "budget" or "affordable" as an in response to a question about a hotel choice, then that term may indicate a preference of the user toward relatively inexpensive travel accommodations. Accordingly, subsequent questions may be modified, added, or removed to reflect this indicated preference; for instance, subsequent questions may relate to inexpensive travel activities.

In another embodiment, questions may be posed as to some of the users favorite things from which a personality profile may be drawn which could be used as a portion of the user profile 205. Some examples of these personality profiles derived from a users preferences include favorite brands of beer (manufacturer and/or type), ice cream (manufacturer and/or flavor), and coffee shop drink (store and/or type). Similarly, for example, when a user indicates a dislike of "rock music," then the questionnaire may eliminate further questions pertaining to "rock music," and may add questions and/or requests for information pertaining to other types of music. Alternatively, when a user indicates that he or she likes "pop music," then the questionnaire may include additional questions pertaining to that subject, for instance, which pop artist the user likes. The adaptive nature of the questionnaire, however, is optional and is not required for functioning of the PSD 200. Also, the particular format, length, style, and adaptive nature of the questionnaire may be flexible and unlimited. Multiple questionnaires may be provided to and completed by the user; further, questionnaires may be provided to the user periodically, for instance to update the user's preference information over time.

As will be understood by one skilled in the art, the user preferences discussed herein are merely exemplary, and the questionnaire may request information, and preference information may be received, regarding any suitable subject towards which a user may have a preference, interest, and the like.

As shown in Fig. 2, transmitting and receiving the responses and/or information by the user 202b is the next step in configuring the PSD 200. This may occur after part or all of the questionnaire has been completed. The transmitting and receiving of the responses may be done by any method known to one skilled in the art.

Storing the responses and/or information by the user under a user profile 205 associated with the user 202c is the next step in configuring the PSD 200. The user profile 205 may be stored in a storage device or at one or more locations assigned to the user, locally and/or remotely. Each user may have one or more user profiles 205 under one or more user accounts. In another embodiment, the user may select to have a second user profile 205 which is the user profile 205 of their favorite celebrity. The user profile 205 of celebrities may be provided by sponsorships and/or endorsements. In an alternate embodiment, the user may respond to questions which would provide a celebrity user profile most like the user. Once the user profile 205 is established, the user profile 205 may be processed by one or more applications to produce a keyword user profile 210. The keyword user profile 210 may be created in any suitable format, and/or according to any suitable method as known to one skilled in the art. The keyword user profile 210 distills the user profile into keywords which characterize the user profile 205.

In an exemplary embodiment, for instance, the keyword user profile 210 may include text strings or strings of alphanumeric characters. The strings may be human and/or machine readable elements representing one or more of the received identification and/or preference information items. The keywords may represent individual identification and/or preference information elements, or may represent combinations of elements, such as identification information or preference information pertaining to a particular subject and/or topic. For instance, the subject and/or topic may relate to user employment or profession, location preferences, music genre preferences, or any other suitable subject and/or topic. In an exemplary embodiment, the keywords may describe a type, class, character, and/or subject of the information contained in the user profile 205.

The keyword user profile 210 includes a collection of identification information and/or preference information of a user of the PSD 200. The keyword user profile 210 may be stored in a storage device or at one or more locations assigned to the user, locally and/or remotely. Each user may have one or more keyword user profiles 210 under one or more user accounts.

In a preferred embodiment, keywords of the keyword user profile 210 are word descriptors that encapsulate the user profile 205 in a minimal amount of information.

In some embodiments, the user profile 205 is converted to a keyword user profile 210 using a master keyword list. The master keyword list "translates" the user profile 205 into general terms which may be used to universally describe certain characteristics of the user. For example, responses of "budget" or "affordable" in response to a question about a hotel choice may be used to look up a general term from the master keyword list. Keywords and/or general terms may be determined using any number of methods known to those skilled in the art.

In an alternate embodiment, the user may use the master keyword list to place information in their user profile 205 to distinguish themselves. The user may wish to add some descriptors which were not determined from the questionnaire or are part of the user profile 205. Some examples include, but are not limited to religious affiliation (Christian, Muslim, Jewish, Atheist, Agnostic), sexual preference (Heterosexual, homosexual, bisexual), sports (Manchester United, Boston Red Sox, Dallas Cowboys) or any other descriptor that may be used to find like minded individuals within the social module 700.

In alternate embodiments, users may define their own master keywords according to personal preferences. For example, "Trekkie" may be defined by a user who is a fan of "Star Trek". This may then be added to the master keyword list so that other "Star Trek" fans can use it and/or be found. This allows the user to define themselves as they see themselves and how they wish to be seen.

In an alternate embodiment, the user may additionally be requested to open an account, and the account opening may include requests for information such as a log-in identification, password, and the like. The PSD 200 may utilize cookies, or other suitable temporary identifier elements, to identify the user and a status of login of the user.

In an alternate embodiment, the configuration of the PSD includes encrypting the user profile 205 and/or the keyword user profile 210 at step 202e. The encrypting may be performed using any suitable encrypting device or technique, and may produce one or more encrypted user profiles 215 and one or more encrypted keyword user profiles 220. The one or more encrypted user profiles 215 and one or more encrypted keyword user profiles 220 may include encrypting all or a portion of the user profile 205 or keyword user profile 210. The one or more encrypted user profiles 215 and one or more encrypted keyword user profiles 220 may be stored on a storage device.

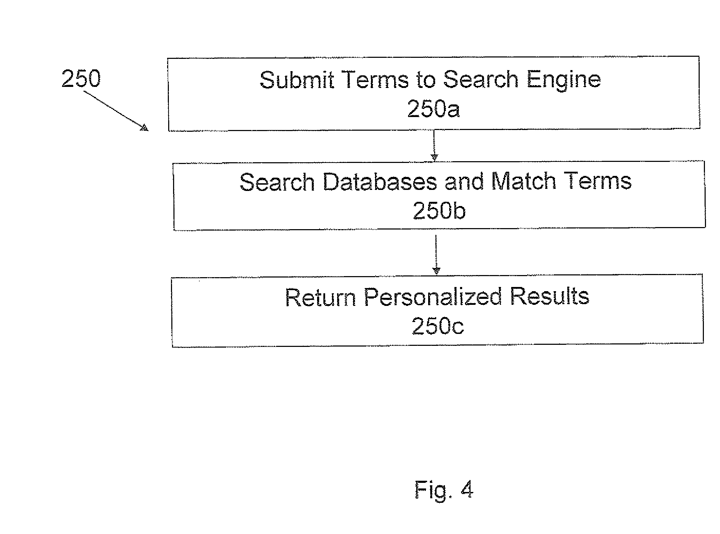

With the PSD 200 configured, FIG. 4 is an embodiment of a method 250 of using the search module 300 of the PSD 200 to produce personalized search results from an Internet search engine. In some embodiments, the PSD 200 interacts with a search engine, known to one skilled in the art, to provide personalized search results. In other embodiments, the PSD 200 includes a search engine to provide personalized search results.

In a preferred embodiment, the method 250 begins with submitting terms to a search engine 250a via the PSD 200. In a preferred embodiment, the terms include one or more query terms supplied by the user along with one or more terms from the keyword user profile 210 from the PSD 200. The PSD 200 preferably submits the one or more terms of the keyword user profile 210 in the background without the user having to take action. In an alternate embodiment, the PSD 200 transmits the user profile 205 instead of the keyword user profile 210.

The search engine searches its collection of databases in step 250b to find the most relevant sites in response to the combination of the query terms and the keyword user profile 210. The search engine may inspect its database for the URLs of resources (web sites or web pages) most likely to be relevant to the submitted query terms and are also most likely to be relevant to the keyword user profile 210. In some embodiments, only portions of the keyword user profile 210 which are relevant to particular query terms are used to find the relevant sites. For instance, if "vegetarian" is in the keyword user profile 210, "vegetarian" may only be relevant to searches with regard to restaurants or food shops. As another example, if "France" is in the keyword user profile, "France" may be relevant to searches with regard to travel, restaurants, food, etc. Matching between query terms and profiles is done by methods known to those skilled in the art. In some embodiments, the PSD 200 will have logic coded into the program so that non-identical matches between query terms and profile terms will be accounted for. The logic may be coded using any number of methods known to those skilled in the art.

The resources may include, for instance, information describing one or more of a topic of the respective web site, a type of information contained in the respective web site, a subject of the respective web site, a type of merchandise or service offered and/or described by the respective web site, an affiliation of the respective web site, or any other suitable information that may reference or describe the web site. In an exemplary embodiment, the resources may describe a type of information contained on the web site and/or a subject of the web site, and may be operable to allow determination of whether the web site may be of interest to a user. In an exemplary embodiment, the query terms may include one or more keywords, and the one or more keywords may describe a type, class, character, and/or subject of the information contained on the web site. The keywords may include one or more human-readable words expressed in alphanumeric characters.

Returning the list of results from step 250b to the user is step 250c. The results may be returned/displayed to the user, with the format of the returned list varying amongst different known search engines. The display may include a listing of web sites, web pages, and/or content. The listings may be separate, or may be provided as a single integrated listing. In an alternate embodiment, the results are returned to the user in a preferred format whose information may be stored in the user profile. The returned hyperlinks may be sorted by relevance, with the results which include keyword user profile 210 terms being located at the top of the list. The sorting by relevance of the returned hyperlinks may be determined using any number of methods known to those skilled in the art.

In alternate embodiments, the keyword user profile 210 may be substituted or augmented by submission of one or more of the user profile 205, the encrypted user profile 215 or the encrypted keyword user profile 220.

In an alternate embodiment of the search module 30 of the PSD 200, the master keyword list (described above) may be used by a business entity to make itself available to the PSD 200. For example, the business entity may subscribe to a PSD subscription system, which may enable the business entity to place keyword information which applies to its business on its website.

For example, if an apparel store considers itself as "chic" or "glamorous," it may have those terms encrypted and thereafter placed in and/or embedded in its website in encrypted form. Additionally, terms relating to the business may be encrypted and placed in and/or stored in the web page, such as "apparel," "clothing," and the like. Subsequently, a PSD user who has selected or provided search information (either as a query term or from the keyword profile 210 or the encrypted keyword profile 220) associated with "chic" or "glamorous," may then be directed to that website, for instance. Using this technique, the PSD 200 may effectively match up searchers with appropriate websites in a convenient manner. Additionally, the keyword user profile 210 terms associated with the user may be matched with search topic information stored in and/or embedded within a web site of the apparel store. Accordingly, keyword user profile 210 from the PSD 200 related to "chic" or "glamorous" may be matched with similar encrypted search topic information in the web site, and the web site and/or content of the web site may be identified as potentially relevant to the search of the user.

In an exemplary embodiment, a search result display including listing of web sites that include the encrypted search topic information matching or similar to the encrypted search term information and/or the encrypted keyword user profile 210 may be displayed to the user. The display may include a listing of web sites, web pages, and/or content. The listings may be separate, or may be provided as a single integrated listing. The display of listings may be determined using any number of methods known to those skilled in the art.

In an exemplary embodiment, the listing may include separate sub-listings whereby one or more sub-listings may include web sites web pages, and/or content having encrypted search topic information matching or similar to the encrypted user parameter information; and one or more sub-listings may include web sites web pages, and/or content having encrypted search topic information matching or similar to the encrypted search term information.

The search result display may also be organized based on an amount a web site owner and/or administrator pays to "buy" a particular keyword as a factor for ranking relevancy of the web site. For example, the more a web site owner pays, the higher the respective web site may be ranked in the search result display. The search results may be presented on a terminal monitor, or on a separate display device connected to the terminal. The search may be based upon the search term and the information saved under the user profile, or the search term or phrase itself.

The nature of the search itself may self-select the words which are relevant from the keyword user profile 210. For example, when a user answered "vegetarian" to a food question in the questionnaire, then the term "vegetarian" may be a keyword when the user thereafter searches for "restaurants" or "food shops." However, when the user describes his or her holiday preference as "exclusive" or "exotic," then those keyword terms may be relevant in a search of other things, since the desire for "exclusive" or "exotic" may be a part of the user's wider personality profile.

The user may also input a search string, such as, for example "restaurant" or "hotel" or "holiday," or the like. In response, the display may include search results based on a most current version of the user profile. The search result may include one or more URLs of web sites, and may include abstracts and/or portions of information from the web sites, or any other information pertaining to the individual search results. In an exemplary embodiment, a summary or abstract of each web site corresponding to each listed URL may be provided, for instance in text or graphical form. The order of relevance in presenting the search results may be based upon a number of factors, including but not limited to: a number of times a search term or phrase appears on a web site, a location of the search term or phrase on the website, an amount a web site owner and/or administrator has paid to subscribe to the search term or phrase, and/or the link structure of the web site including the search term or phrase on the world wide web.

In an exemplary embodiment, for instance, the query terms may be included within a section of a web page defined by HTML tags, for instance within sections defined by tags such as "meta," "meta content," "head," or any other suitable tag or position within a web page. Alternatively, the query terms may be included within style sheet information, metadata fields and/or portions, or any other suitable information used to define and/or serve web page content information.

In an exemplary embodiment, for instance, one or more query terms may include regional identifiers naming countries or regions, such as "France" and "French. " The one or more query terms may be encrypted, and the encrypted information may be inserted and/or embedded in one or more web pages.

The user may utilize the PSD 200 to search network content, for instance Internet content, by providing query terms pertinent to and/or describing the information the user would like to locate. In an exemplary embodiment, the query terms may include one or more keywords describing the content information of interest to the user. The searching may include input of one or more query terms by the user, for instance into the PSD 200.

After entry, the query terms may be encrypted, for example, using a suitable encryption algorithm and/or technique. In an exemplary embodiment, the receipt and encryption of the query term may be performed by the PSD 200. In some embodiments, more than one type of encryption may be used to differentiate users and/or to group users.

In a preferred embodiment, the PSD 200 may also update the user profile 205 (or keyword profile 210) based upon information selected by the user in a prior search result. In an exemplary embodiment, for instance, a plurality of links may be presented upon a search for a subject, such as "ball," and the presented links may each relate to an activity or sport utilizing a ball. When a user selects a baseball link instead of a cricket ball link from amongst the presented links then it may be included in the user profile 205 that the user prefers a baseball over a cricket ball, and future searches may be performed based on this updated user profile 205. Additionally, a relative user preference for baseball over cricket may be stored within the user profile 205.

In an exemplary embodiment, the PSD 200 may also include a security module 400, such as a "Guard Dog" function, wherein the PSD may protect a user's terminal from malicious activities or objects, such as computer viruses. The user's terminal may be one or more of the remote terminals 130a-130n, as described above. The security module 400 may include execution of an application program that protects the remote terminal the user uses to perform the search. The application program may be an anti-virus application or the like, and may be operated by adults to protect their children's network usage. The exemplary function may have an anti-virus "skin" attached so that may behave like an anti-virus software. In an exemplary embodiment, an anti-virus message may appear via a device graphic when the terminal is prone to a virus. For instance, the PSD may be set up such that a list of known contacts is created, and when a child receives a visit from an unknown person, not only does the PSD safeguard the child's terminal, but also sends an alert message or sign to the adult's terminal. In an exemplary embodiment, an adult can also recommend that any child under a certain age, for instance, eighteen, may take their PSD with them when they visit virtual reality sites in order to protect them from proscribed contact.

In another embodiment, if the PSD user has a subaccount or user profile for a child, the parent (or guardian) of the account may view the activity of the child. In yet another embodiment, the parent may receive messages or reports of any unauthorized users trying to contact the child. In an exemplary embodiment, the PSD may include a random module 900, whereby an owner or user of the PSD may also configure the PSD to provide information from one or more web sites the PSD of random interest to the owner or user. The PSD may randomly search web sites which may be of interest to the owner or user based upon their user profile, and. The PSD may then alert the user automatically to any changes or new information on that web site of personal interest. For instance, the PSD may visit chosen sites at regular intervals and acquire desired information. As a further example, a user may set up a PSD link to the web site of a favorite band, and the PSD may deliver updated information about the band to the user's terminal. As a further example, a user looking for a job may utilize the PSD to "watch" upcoming jobs in a market, for instance by analyzing a web site containing job listing sites and alerting the user when a suitable job appears. The user may be alerted via electronic mail, instant message, text message, telephone call, postal mail, or any other suitable communication mechanism. In an exemplary embodiment, the PSD may also be utilized to visit situation vacant sites in any given trade magazine or newspaper, and may alert the user when a suitable position becomes available.

In an exemplary embodiment, the PSD may also include an electronic mail module 600. The user may set up one or more electronic mail accounts with the PSD through which the user may receive and send electronic mail communications. The PSD may further include a spam filter application for blocking or eliminating spam electronic mail communication from the user's inbox. The PSD may also be programmed to destroy unwanted advertising and extract definitions of what is welcome and unwelcome as determined by the user. In an alternate embodiment, the user may specify that spam which includes keywords included in the user profile 205 may be accepted. In another embodiment, the user may have the spam mail sent to a separate folder for viewing. In yet another embodiment, the user may specify types of email which would be acceptable. In yet another embodiment, the user may specify how often they wish to receive the "acceptable" or "keyword" spam.

In an exemplary embodiment, the PSD may have a social module 700 which may be used to locate and/or communicate with other users. The user may have access to virtual spaces or "parks," which may be set up based on the user population in a certain area or location, for instance, based on the user identification information and user preference information stored within the user profiles of the respective users. For instance, a virtual space may be created where PSDs of users may interact with PSDs of other users. If the users feel sociable, they may configure their PSD to make contact with any other PSD in the virtual park that may have user identification information and/or user preference information which match their own. By doing so, the PSD user may automatically select only those users with similar identities, tastes, preferences, and the like. For example, when two users had answers of "yes" to the same ten questions in the questionnaire, then the first user may be notified of the second user and introduced, and vice versa.

In an exemplary embodiment, users may have an option to choose how sociable they feel by stipulating the number of same answer matches. For example, a user may require a high correlation of interests by stipulating twenty five same answer matches. Alternatively, the user may be satisfied with a low correlation or matching of interests, for instance by requiring just one same answer match. This function may be optional and may be restricted only to users who are over a certain age.

In alternative embodiments, the social module 700 may be used to develop social groups and or fan clubs of like minded users. Users may use the social module 700 to provide a virtual space where PSDs of users may interact with PSDs of other users who have interest in similar likes, personality traits or user profiles 205. In an alternate embodiment, the social module 700 may make the virtual space accessible to all users and would search out those users who have similar interests and invite them to that space. In another embodiment, the social module 700 may make the virtual space accessible to all users and those users who visit the space would have that information placed in their user profile 205.

In an exemplary embodiment, a professional module 800 may allow users working in different professions may tailor the PSD to their needs. For example, an Architect may be given an "Architect's Questionnaire," and the questions may be structured to establish the particular field in which the architect user works. The users may then use the PSD to find professional information relevant to them in an efficient manner and without requiring the user to analyze extra information.

In an exemplary embodiment, the PSD may include a random interest module 900, whereby an owner or user of the PSD may also configure the frequency the PSD searches and reports on web sites which reflect the user profile, keyword user profile, and/or encrypted user profile. The PSD may then alert the user automatically to any random websites on web sites of personal interest. For example, a user may have specified a favorite band, and the PSD may deliver information about the band from random web sites to the user's terminal. These web sites may not have been visited in the past by the user. As a further example, if the favorite band had a news article published about it or a new video posted, the PSD would deliver that content to the user's terminal on a specified frequency by the user, for example every morning. In a preferred embodiment, the PSD randomly searches the Internet for content of interest to the user without the user actively requesting the information.

In an alternate embodiment, the users of the PSD 200 may provide virtual recommendations of service providers within their user profile 205. Recommendations from multiple PSDs 200 may be compiled to provide a community (virtual space) where other users may access these recommendations. These recommendations may be thought of as a guide for the users by the users.

In another embodiment, the user profile 205 may contain a shopping module acting as a personal shopper for the user. The shopping module preferably includes secure payment information of the user such as credit card information and/or bank information which may be used with the shopping module when making purchases. For example, when making a purchase, a user may specify items they are looking for and a preferred price they are willing to pay for that item. The PSD 200 would then monitor websites and when an item became available at the preferred price, the PSD would purchase the item using the secure payment information. This would work for monitoring prices for consumer items including, but not limited to, airline tickets.

In yet another embodiment, for any of the above modules which return information to the user, the user may specify when the PSD 200 searches and reports the information. The user may specify the frequency the information is retrieved/reported(daily, weekly, monthly) and how (email, log in (welcome) screen, etc.) the information might be accessed by them. In another embodiments, the PSD 200 may be part of a virtual reality network with other PSDs 200. In other words, the PSDs 200 would be able to interact with each other without the user being present. For example, the PSDs might swap preferences or relay other information that might be of interest to the user. In some embodiments, this function would be secure so that no information would be transmitted that would endanger the safety of the user either in reality or virtual reality. In some embodiments, the user would also set preferences for receiving this information or could opt out of this function of the PSD.

While describing the PSD 200, the term "dog" has been used. The PSD 200 may be marketed to users as a dog which is personalized. The dog may be used as an icon during setup and the user may be capable of choosing the type of dog they wish to be. These choices include breed, color and other user options (accessories) to personalize the dog. The dog may be thought of as a fun and simple way to provide the personal search engine concept to those users who may not be as familiar with computer terminology.

As described above, the dog would initially be "trained" by the user supplying information to the PSD 200 to set up the user profile 205. The dog will be personalized to single user profile and the dog will have multiple traits which may be the modules described above. Since there may be more than one user profile, there may be more than one dog. Each dog will have modules (traits) associated with it. For example, the security module 400 may be thought of as a "guard dog" since it protects the user information. The guard dog (security module) of a parent would monitor a child's dog (security module) for suspicious activity and/or any of the functions described above for the security module.

In other embodiments, the search module 300 may be a "hunting dog" as it fetches information for the user. The electronic mail module 600 might also include animation so that the dog would "eat" spam mail. In other embodiments, the social module 700 may be shown as "walking the dog". For example, virtual spaces may be set up similar to dog parks where dogs are able to interact and find similar dogs. In some embodiments, the PSD 200 will be an animated icon which would have one or more of its modules and/or operations expressed as a dog and dog type actions. This would make the PSD 200 easier to market to users, especially children, who want to own a dog, care for a dog and would have a dog protect them.

The system according to an exemplified embodiment of the present application embodies the methods as described above. Yet another exemplified embodiment of present application is a storage medium, such as a computer-readable medium, for example, a CD-ROM, RAM, optical medium, magnetic tape, optical disk, floppy disk, USB memory, or any other memory device or electronic medium adapted to store applications embodying the elements and methods as described above. The program instructions in the method may be implemented in any of various ways, including procedure-based techniques, component-based techniques, and/ object-oriented techniques, among others. For example, the program instructions may be implemented using HTML, JAVA, Visual Basic, ActiveX controls, C, C++, C + + objects, C#, JavaBeans, Microsoft Foundation Classes ("MFC"), AJAX, combinations thereof or other technologies, methodologies, or programming languages, as desired.

The computer systems referred to herein may take various forms, including a personal computer system, a digital signal processor ("DSP"), mainframe computer system, workstation, network appliance, netbook, Internet appliance, or other device. In general, the term "computer system" may be broadly defined to encompass any device having one or more processors, which executes instructions from a memory medium. The computer system may also include any suitable processor known in the art. In addition, the computer system may include a computer platform with high speed processing and software, either as a standalone or a networked tool. The computer-implemented method for which the program instructions are executable may include any other step(s) of any other method(s) described herein.

As will be understood by one skilled in the art, the basic premise of searching the Internet and ranking results may be done by any known method which will be enhanced by the inclusion of profile terms, either from the user profile 205, keyword user profile 210 or their encrypted counterparts.

As will be understood by one skilled in the art, elements of any of the exemplary embodiments described in the present application may be combined with elements of any other exemplary embodiment.

It should be understood that the present application is not limited to the precise exemplary embodiments described herein and that various changes and modifications may be effected by one skilled in the art without departing from the spirit or scope of the application. For example, elements and/or features of different illustrative embodiments may be combined with each other and/or substituted for each other within the scope of the present disclosure and the appended claims. In addition, improvements and modifications which become apparent to persons of ordinary skill in the art after reading the present disclosure, the drawings, and the appended claims are deemed within the spirit and scope of the present application.

## Claims

1. A computer-implemented method for providing personalized search results from an online search engine, the method comprising:
generating an encoded word;
providing the encoded word for insertion into code associated with at least one website; and
selecting the at least one website having the at least one encoded word based on an online user search query and a user profile, wherein the user profile comprises user interest information.

2. The method of claim 1, wherein the set of documents are encoded with keywords which match keywords of user interest information.

3. The method of claim 1 or claim 2, wherein the user interest information is derived from a personal questionnaire responded to by the user.

4. The method of any preceding claim, wherein the user profile includes information derived from prior search queries provided by the user.

5. The method of any preceding claim, wherein the documents are automatically arranged, filtered, re-ranked, or organized based on the user interest information, or wherein the selection of documents is processed in accordance with a browser application.

6. A computer implemented personal search system for one or more users, the system comprising,
a personalized search engine module for providing personalized search results from an online search engine which utilizes a user profile comprising user interest information.

7. The system of claim 6, further comprising one or more of the following:
(i) a security module for protecting the user profile from either computer viruses or computer predators;
(ii) a notification module for retrieving new web site content based on the user profile;
(iii) an electronic mail module for shielding the user from unwanted electronic mail and or unwanted advertising;
(iv) a social networking module for connecting the one or more users to each other of similar user profiles;
(v) a professional networking module for connecting the one or more users to each other of similar user professional profiles;
(vi) a random interest module for retrieving random web site content based on the user profile;
(vii) one or more components to isolate private information from the public domain; and
(viii) a toolbar that provides an interface and internal functionality to type keywords and to send requests.

8. A computer-implemented system for searching information, comprising:
at least one computer device operable by a user, wherein the at least one computer device is operable to:
receive user identification information of the user;
provide a user with a questionnaire containing at least one preference information question;
receive user preference information in response to the questionnaire;
receive search term information from the user;
search for at least one of the identification information, the user preference information, or the search term information in one or more predetermined web sites; and
present a listing to the user when at least one of identification information, the user preference information, or the search term information is located, the listing including information associated with at least one of the predetermined websites containing the located information.

9. The system of claim 8, further comprising the at least one computer device is operable to:
encrypt at least one of the received user identification information and received user preference information, or
encrypt at least a portion of the received search term information.

10. The system of claim 8 or claim 9, further comprising:
receiving search topic information of at least one predetermined web site;
encrypting the received search topic information; and
transmitting the encrypted search topic information to the predetermined web site.

11. The system of any of claims 8 to 10, wherein the search term information is associated with an Internet search, an intranet search, an extranet search, or a database search.

12. The system of any of claims 8 to 11, wherein the questionnaire includes at least one question associated with a user preference, or at least one multiple choice question.

13. The system of any of claims 8 to 12, wherein the user preference information includes at least one of a food preference of the user, a clothing preference of the user, an artistic preference of the user, a travel preference of the user, a geographic preference of the user, a lifestyle choice of the user, and employment information of the user.

14. The system of any of claims 8 to 13, wherein the search includes comparing at least a portion of the encrypted identification information, the encrypted user preference information, or the encrypted search term information with information contained in the one or more predetermined web sites.

15. The system of any of claims 8 to 14, wherein the listing includes at least one web page universal resource locator, or the listing is presented in an order of relevance.

16. The system of claim 15, wherein the order of relevance is based upon:
(i) a number of times a at least a portion of the encrypted identification information, the encrypted user preference information, or the encrypted search term information appears on the respective predetermined web site, or
(ii) a location of at least a portion of the encrypted identification information, the encrypted user preference information, or the encrypted search term information search query term on the respective predetermined web site, or
(iii) an amount paid to subscribe to the search term information, or
(iv) a link structure of the respective predetermined web site including the located information.

17. The system of any of claims 8 to 16, further comprising updating the user profile based upon information selected by the user in a prior search result.

18. The system of any of claims 8 to 17, further comprising executing a protection application program that protects a computer device of the user used to perform the search, and optionally or preferably, wherein the protection application program includes an anti-virus application.

19. The system of any of claims 8 to 18, further comprising informing the user of a change or new information contained on:
(i) at least one of the predetermined websites, or
(ii) at least one random website based upon the user preference information of the user.

20. The system of any of claims 8 to 19, further comprising executing an electronic mail application, and optionally or preferably, further comprising executing an anti-spam application for filtering spam electronic mail communications from the electronic mail application.

21. The system of any of claims 8 to 20, further comprising matching the user with another user based upon the user preference information of the user and upon user preference information of the other user.

22. The system of claim 8, further comprising informing the user of a change or new information contained on at least one random website based upon the user preference information of the user.
